# EUROPÄISCHE PATENTANMELDUNG

(11) **EP 0 579 188 A1**
(43) Veröffentlichungstag der Anmeldung: **19.01.1994**
(21) Anmeldenummer: 93111240.3
(22) Anmeldetag: 13.07.1993
(51) Int. Cl.: B60R 16/02, H01R 35/02

(54) **Spiralkabeldose**

(30) Priorität: 15.07.1992 DE 4223308
(71) Anmelder: Klier, Jürgen, 63303 Dreieich (DE)
(72) Erfinder: Klier, Jürgen, D-91781 Weissenburg (DE); Satzinger, Gerhard, D-91735 Muhr am See (DE); Schüle, Gerhard, D-91785 Pleinfeld (DE)

(57) **Zusammenfassung**

Aus einem Dosenunterteil (21) und einem Dosenoberteil (22) gebildete Spiralkabeldose (20) zum Wickeln und zur Installation einer Kabelspirale (24) an einem hierfür bestimmten Einsatzort, etwa im Bereich des Lenkrades eines Kraftfahrzeuges. Die Spiralkabeldose (20) ist in einer Außenzylinderwand (30) und einer Innenzylinderwand (26) mit Kabeldurchführungen (34, 35) versehen, die ein Wickeln der Kabelspirale (24) in der Dose und die Ausbildung von parallel zur Dose ausgerichteten Winkelendbereichen (32, 33) zur nachfolgenden elektrischen Verbindung ermöglichen.

## Beschreibung

Die Erfindung betrifft eine Spiralkabeldose zur Aufnahme und Installation einer Kabelspirale, insbesondere einer elektrischen Airbag-Kabelspirale.

Bekanntlich handelt es sich bei Airbags um mit Luft füllbare Prallschutzsäcke in Kraftfahrzeugen, die beim Aufprall eines Kraftfahrzeuges auf ein Hindernis durch eine Steuereinrichtung ausgelöst in Bruchteilen von Sekunden aufgeblasen werden, um einen Aufprallschutz für Kraftfahrzeuginsassen zu schaffen. Hierdurch sollen zumindest größere Verletzungen bei den Kraftfahrzeuginsassen vermieden werden.

Bislang werden Airbag-Einrichtungen meistens im Pralltopf des Fahrzeuglenkrades installiert. Da die das Auslösen und Aufblähen des Airbags verursachenden Steuereinrichtungen außerhalb des Lenkrades installiert sind, ist es erforderlich, daß die elektrische Verbindung zwischen dem Airbag und den Steuereinrichtungen Relativdrehungen zwischen dem im Pralltopf des Lenkrades zusammen mit diesem mitdrehenden Airbag und der feststehenden Steuereinrichtung ermöglicht.

Zur Schaffung dieser elektrischen Verbindung ist es bekannt, eine Spiralkabeldose zu verwenden, in der ein spiralförmig aufgewickeltes Flachkabel aufgenommen ist. Ein Beispiel einer solchen Spiralkabeldose ist in der DE 40 31 235 A1 gezeigt. Die bekannte Spiralkabeldose ist zwischen dem Lenkstock und dem Pralltopf des Lenkrades angeordnet, so daß Endbereiche des in der Spiralkabeldose aufgenommenen Flachkabels zum einen zu dem im Pralltopf angeordneten Airbag und zum anderen zu der Steuereinrichtung, etwa durch den Lenkstock hindurch, geführt sind.

Die bekannte Spiralkabeldose besteht aus einem unteren Dosenteil, das fest mit dem Lenkrad verbunden ist, und einem oberen Dosenteil, das relativ bewegbar zum unteren in diesem aufgenommen ist. Das untere Dosenteil weist zwei konzentrische Zylinderwänden, nämlich eine Innenzylinderwand und eine Außenzylinderwand auf, die durch eine Ringscheibenwand miteinander verbunden sind. In dem nach oben hin offenen Kabelaufnahmeraum des unteren Dosenteils ist die Kabelspirale eingelegt. Der Kabelaufnahmeraum wird nach oben hin verschlossen durch eine Ringscheibenwand des oberen Dosenteils, an deren Außenumfang sich eine Außenzylinderwand anschließt, die zur Einstellung des Abstandes zwischen der Ringscheibenwand des unteren Dosenteils und der Ringscheibenwand des oberen Dosenteils sich an dem unteren Dosenteil abstützt.

Es ist bekannt, zur Abführung von abgewinkelten Endbereichen (Winkelendbereiche) der Kabelspirale sowohl an der Ringscheibenwand des oberen als auch des unteren Dosenteils je einen Abführstutzen vorzusehen, durch den jeweils ein Spiralkabelende nach Einsetzen der Kabelspirale in die Spiralkabeldose hindurchgeführt werden muß. Wie aus der genannten DE 40 31 235 A1 sowie der DE 36 41 706 A1 und der DE-GM 85 05 830 bekannt ist, kann man die Enden des Spiralkabels mit einer Kunststoffarmierung versehen, die zum einen zur Formung der Winkelendbereiche des Spiralkabels und zum anderen zur Ausbildung von Zugentlastungen dient. Die Kabelarmierungen, die angespritzt oder auf das Kabel aufgeklipst werden, erweisen sich als aufwendig in der Herstellung und verursachen aufgrund der durch sie gegebenen Querschnittsvergrößerung des Spiralkabels im Winkelendbereich, der sich bis in den Kabelaufnahmeraum erstreckt, eine für die Installation der Spiralkabeldose ungünstige Vergrößerung deren Baugröße. Darüber hinaus ist infolge der Querschnittsvergrößerung im Winkelendbereich im übrigen Bereich der Kabelspirale ein relativ großer Freiraum zwischen der Kabelspirale und dem nach oben und unten durch die Ringscheibenwandungen begrenzten Kabelaufnahmeraum gegeben. Hieraus ergibt sich mit Ausnahme für die Winkelendbereiche eine axiale Bewegbarkeit für die Kabelspirale, die die Ursache unerwünschter Klappergeräusche sein kann.

Zudem macht das Einsetzen der Kabelspirale in die Spiralkabeldose vor oder während der Installation der Spiralkabeldose am Lenkrad eine weitere Handhabung der Kabelspirale nach deren Wicklung erforderlich.

Der Erfindung liegt die Aufgabe zugrunde, eine Spiralkabeldose zur Verfügung zu stellen, die eine weitere Handhabung der Kabelspirale nach deren Herstellung überflüssig macht, und die sich durch eine geringe Bauhöhe auszeichnet.

Die erfindungsgemäße Lösung besteht darin, die Spiralkabeldose so auszubilden, daS sie nicht nur zur Aufnahme und Installation der Kabelspirale an dem für ihren Einsatz bestimmten Ort sondern auch zur Herstellung der Kabelspirale geeignet ist. Dabei ist die erfindungsgemäße Spiralkabeldose so ausgebildet, daß auf eine Ausbildung von Kabelzugentlastungen in der bisher bekannten Art und Weise verzichtet und somit eine geringere Bauhöhe der Spiralkabeldose erreichbar ist. Mit dem Wegfall der Notwendigkeit besonders ausgebildete Kabelzugentlastungen vorzusehen, kommt auch die Ursache für das Auftreten der beschriebenen Klappergeräusche in Fortfall, so daß sich die erfindungsgemäße Spiralkabeldose durch einen besonders geräuscharmen Betrieb auszeichnet.

Die Erfindung schafft eine Spiralkabeldose zur Aufnahme und Installation einer Kabelspirale, insbesondere einer elektrischen Airbag-Kabelspirale, deren Kabelenden durch Abwinkeln von der Kabelspirale nach unterschiedlichen Seiten der Spiralebene als ein innerer und ein äußerer Winkelendbereich ausgebildet und mit einer Zugentlastung versehen sind, mit einem ersten Dosenteil und einem zweiten Dosenteil, die relativ zueinander verdrehbar sind und einen ringförmigen Kabelaufnahmeraum einschließen, wobei die Dosenteile Kabeldurchführungen zur Herausführung des inneren Winkelendbereichs und des äußeren Winkelendbereichs aus der Dose aufweisen, und der Kabelaufnahmeraum zu einer Seite hin axial durch eine scheibenförmige Wand (Scheibenwand) sowie außenseitig durch eine Außenzylinderwand des ersten Dosenteils (Außenteil) und zur anderen Seite hin axial durch eine Scheibenwand sowie radial innenseitig durch eine Innenzylinderwand des zweiten Dosenteils (Innenteil) begrenzt ist, wobei die Kabeldurchführungen in der Außenzylinderwand des Außenteils und der Innenzylinderwand des Innenteils angeordnet sind, die Kabeldurchführungen mit Umlenkeinrichtungen zur Ausbildung der Winkelendbereiche der Kabelspirale versehen sind.

Eine solche Zugentlastung kann in jedem Winkelendbereich durch Verklemmen des Kabels mittels einer in eine Führung einbringbaren Arretierungseinrichtung bewirkt werden.

Bei einer bevorzugten Ausführungsform der erfindungsgemäßen Spiralkabeldose ist das die Außenzylinderwand aufweisende Außenteil als Dosenoberteil und das die Innenzylinderwand aufweisende Innenteil als Dosenunterteil ausgebildet. Hierdurch wird das Dosenunterteil quasi dachartig vom Dosenoberteil überragt, so daß wirksam verhindert ist, daß Verunreinigungen in den wegen der Relativbewegbarkeit der Dosenteile zwischen diesen angeordneten Ringspalt hineinfallen und in den Kabelaufnahmeraum eindringen können.

Als besonders vorteilhaft erweist es sich, wenn in der Außenzylinderwand des Dosenoberteils zum Unterrand hin auslaufende Öffnungen vorgesehen sind. Dadurch ist sichergestellt, daß infolge der Relativdrehung zwischen den Dosenteilen und der Kabelspirale entstehender Abrieb oder etwa auch im Kabelaufnahmeraum gebildetes Kondenswasser aus diesem austreten kann. Sowohl das Verhindern des Eintretens von Verunreinigungen in den Kabelaufnahmeraum als auch die geschaffene Möglichkeit des Austretens von Kondenswasser oder Kabelabrieb aus dem Kabelaufnahmeraum heraus tragen insgesamt zu einer Erhöhung der Lebensdauer der Kabelspirale bzw. der Spiralkabeldose bei.

Bei einer vorteilhaften Ausführungsform der Spiralkabeldose weisen die Umlenkeinrichtungen eine Umlenkkante zur Abwinklung und eine Arretierungseinrichtung zur Fixierung der Winkelendbereiche an der Dose auf.

Hierdurch wird die notwendige Kabelzugentlastung quasi durch die Ausbildung der Winkelendbereiche selbst ermöglicht, ohne daß besondere Maßnahmen am Spiralkabel selbst notwendig wären. Dies bedeutet eine entscheidende Vereinfachung bei der Herstellung der Kabelspirale.

Die Arretierungseinrichtung kann so aufgebaut sein, daß eine erste Arretierungsstellung (Vorarretierung) und eine zweite Arretierungsstellung (Endarretierung) einstellbar ist, so daß durch die Vorarretierung eine Führung zur Ausbildung eines Winkelendbereiches und durch die Endarretierung eine Festlegung, also Zugentlastung, des Winkelendbereiches erreicht wird.

Vorzugsweise sind die Arretierungseinrichtungen verliersicher mit der Spiralkabeldose verbunden. Insbesondere bei einer mit der Spiralkabeldose einstückigen Ausbildung erweist es sich als vorteilhaft, wenn die Arretierungseinrichtungen mit Rasteinrichtungen versehen sind, die zur Erzielung der verschiedenen Raststellungen in Rastaufnahmen eingesetzt werden können.

Bei einer besonders vorteilhaft ausgebildeten Arretierungseinrichtung ist zumindest eine Rasteinrichtung vorgesehen, die durch eine entsprechend ausgebildete Öffnung im Endbereich des Kabels hindurchgeführt und anschließend unter Aufnahme des Kabelendbereichs zwischen der Arretierungseinrichtung und der Dose in eine Rastöffnung der Dose eingesetzt werden kann. Durch eine derartig ausgebildete Arretierungseinrichtung ist nicht nur die Ausbildung eines Winkelendbereichs unter gleichzeitiger Realisierung einer Zugentlastung möglich, sondern auch eine exakte Positionierung des den Winkelendbereich bildenden Kabelendbereichs gegenüber der Dose.

Zur Verbindung des Innenteils der Spiralkabeldose mit dem Außenteil ist die Innenzylinderwand des Innenteils in ihrem Randbereich mit mindestens einer Rasteinrichtung versehen, die nach Durchführung durch eine Mittenöffnung der Scheibenwand des Außenteils hinter dieser einrastet. Dabei stützt sich dann die Scheibenwand des Innenteils in einer Stützführung der Außenzylinderwand des Außenteils ab.

Infolge dieser Anordnung der zusammengesetzten Dosenteile ergibt sich sowohl zwischen der Scheibenwand des Außenteils und der Rasteinrichtung an der Innenzylinderwand des Innenteils als auch zwischen dem Scheibenwandumfang des Innenteils und der Stützführung in der Außenzylinderwand des Außenteils eine Gleitführung. Durch diese zweifache Gleitführung wird eine besonders reibungsarme Führung der Dosenteile erreicht. Darüber hinaus ist durch die zweifache, axial voneinander beabstandete Gleitführung eine möglichst genaue Führung der Dosenteile zueinander möglich, so daß übermäßiges Spiel zwischen den Dosenteilen, das zu einer Geräuschentwicklung bei der Relativdrehung der Dosenteile führen kann, vermieden werden kann.

Bei einer zweiteiligen Ausführung des Innenteils ist es möglich, für die Scheibenwand und die Innenzylinderwand verschiedene Materialien vorzusehen. Ein Vorteil dieser zweiteiligen Ausbildung besteht darin, daß etwa die mit Befestigungseinrichtungen zur Befestigung am Lenkradstock versehene Scheibenwand aus Metall und die Innenzylinderwand aus Kunststoff bestehen kann. Hierbei können Befestigungsgewinde unmittelbar, also ohne die Verwendung etwaiger Gewindeeinsätze, an der Scheibenwand vorgesehen werden, wohingegen für die Innenzylinderwand ein flexibler Kunststoff verwendet werden kann, so daß die Rasteinrichtungen besonders einfach realisierbar sind.

In dem Fall, daß der Innenumfangsrand der mit einer Mittenöffnung versehenen Scheibenwand des Innenteils die Innenzylinderwand des Innenteils nach innen überragt, ist eine Aufnahme des Innenteils auf einem Wickeldorn zur Durchführung der Drehung des Innenteils beim Wikeln der Kabelspirale möglich, ohne daß durch den Wickeldorn die für die Einstellung der Arretierungseinrichtung an der Innenzylinderwand erforderliche Zugänglichkeit beeinträchtigt wäre.

Weitere vorteilhafte Ausführungsformen der erfindungsgemäßen Spiralkabeldose werden in der Figurenbeschreibung noch eingehend erläutert.

Gegenstand der Erfindung ist weiterhin ein Verfahren zur Einbringung einer Kabelspirale in eine erfindungsgemäße Spiralkabeldose, wobei ein Endbereich des Spiralkabels durch die äußere und die innere Kabeldurchführung hindurchgeführt wird, wobei das aus der inneren Kabeldurchführung austretende Kabelende mittels der inneren Umlenkeinrichtung zur Bildung des inneren Winkelendbereichs in einer Richtung zur Dosenlängsachse hin umgelenkt wird, und der innere Winkelendbereich durch die innere Arretierungseinrichtung festgelegt wird, und das mit der Innenzylinderwand versehene Innenteil gegenüber dem mit der Außenzylinderwand versehenen Außenteil gedreht wird, wobei sich das Kabel auf der als Wickelkern dienenden Außenseite der Innenzylinderwand spiralförmig innerhalb des Kabelaufnahmeraums aufwickelt, und die Drehung so lange erfolgt, bis die vorgegebene Windungszahl der Kabelspirale erreicht ist, und ein nach außen aus der Kabeldurchführung herausragender Endbereich des Kabels um die äußere Umlenkeinrichtung herum zur Bildung des äußeren Winkelendbereiches in die andere Richtung zur Dosenlängsachse hin umgelenkt wird, und der äußere Winkelendbereich durch die äußere Arretierungseinrichtung festgelegt wird.

Das erfindungsgemäße Verfahren ermöglicht die Ausbildung einer Kabelspirale in einer Spiralkabeldose, die nachfolgend zur Installation des Spiralkabels im Lenkrad eines Kraftfahrzeuges verwendet werden kann, ohne daß das Spiralkabel außerhalb der Spiralkabeldose gehandhabt werden müßte.

Vorzugsweise befindet sich bei Ausbildung des inneren Winkelendbereiches die innere Arretierungseinrichtung in ihrer Vorraststellung. Anschließend wird nach Durchführung des Kabels und Ausbildung des Winkelendbereiches die innere Arretierungseinrichtung in ihre Endraststellung überführt. Dadurch ist der innere Winkelendbereich ausgerichtet und durch die Arretierungseinrichtung an der Dose zugfest festgelegt. Zur Bildung und Arretierung des äußeren Winkelendbereiches nach Durchführung des eigentlichen Wickelvorganges der Kabelspirale wird die sich zunächst in ihrer Offenstellung befindliche äußere Arretierungseinrichtung zum ausrichtenden Arretieren des Wickelendbereiches in ihre Raststellung überführt.

Das erfindungsgemäße Ausbilden der Wickelendbereiche durch Festlegung der Spiralkabelenden an der Spiralkabeldose schafft gleichzeitig Zugentlastungen für die Spiralkabelenden, so daß auf eine besondere Ausgestaltung der Spiralkabelenden verzichtet werden kann. Dies erweist sich insbesondere deswegen als vorteilhaft, weil bisher die Zugentlastung der Spiralkabelenden durch eine entsprechende Umspritzung realisiert wurde, in deren Folge es leicht zu Beschädigungen des empfindlichen Flachkabels bzw. der darin enthaltenen dünnen Leiterbahnen durch Temperatur- und / oder Druckeinwirkung kommen kann.

Darüber hinaus besteht ein wesentlicher Vorteil des erfindungsgemäßen Verfahrens darin, daß die Ausbildung der Wickelendbereiche quasi beim Wickelvorgang bzw. durch Festlegung der Spiralkabelenden nach dem Wickelvorgang an der Dose erfolgt.

Bei dem erfindungsgemäßen Verfahren dient ein und dieselbe Spiralkabeldose sowohl zur Durchführung des Wickelvorganges, also quasi als Wickelvorrichtung für die Kabelspirale, als auch zur Installation der Kabelspirale im Lenkrad, ohne daß wie bislang, nach der Herstellung der Kabelspirale in einer extra hierfür vorgesehenen Wickelvorrichtung, ein in der Regel manuell ausgeführtes Einsetzen der Kabelspirale in die Spiralkabeldose zur Installation im Lenkrad erfolgen muß. Hierdurch wird demnach ein Arbeitsgang gespart und darüber hinaus auch eine Beschädigung der empfindlichen Kabelspirale durch unsachgemäße Handhabung ausgeschlossen und ein Installieren der Kabelspirale im Lenkrad mit bezüglich der neutralen Lenkradstellung falschem Eindrehungszustand der Kabelspirale vermieden.

Die Spiralkabeldose dient jedoch erfindungsgemäß nicht nur zum Wickeln der Kabelspirale und zu deren Installation an dem hierfür bestimmten Einsatzort sondern auch zum Transport der Kabelspirale. Somit dient die Kabelspiraldose auch zum Schutz der empfindlichen Kabelspirale nach dem Wickeln und vor dem Einbau.

Nachfolgend wird eine bevorzugte Ausführungsform der erfindungsgemäßen Spiralkabeldose unter Darstellung des erfindungsgemäßen Verfahrens zur Einbringung einer Kabelspirale in die Dose anhand der Zeichnungen näher erläutert. Es zeigen:
- **Fig. 1**: Eine Explosionsdarstellung einer erfindungsgemäßen Spiralkabeldose mit darin angeordneter Kabelspirale;
- **Fig. 2**: das Einführen eines Kabelendes in die Spiralkabeldose zum Festlegen und Wickeln des Spiralkabels in der Spiralkabeldose wie in den nachfolgenden Figuren weiter dargestellt;
- **Fig. 3**: die Ausbildung eines inneren Winkelendbereiches des Flachkabels;
- **Fig. 4**: den Wickelvorgang zum Wickeln der Kabelspirale in der Spiralkabeldose;
- **Fig. 5**: die Ausbildung des äußeren Winkelendbereiches der Kabelspirale;
- **Fig. 6**: die Fixierung des äußeren Winkelendbereiches der Kabelspirale an der Spiralkabeldose;
- **Fig. 7**: die Spiralkabeldose mit darin angeordneter Kabelspirale in einer Unteransicht;
- **Fig. 8**: die Spiralkabeldose in einer Querschnittsdarstellung;
- **Fig. 9**: eine Ausführungsvariante der Spiralkabeldose in einer Querschnittsdarstellung;
- **Fig. 10**: eine innere Arretierungseinrichtung an der Spiralkabeldose in perspektivischer Darstellung;
- **Fig. 11**: die Arretierungseinrichtung gemäß **Fig. 10** in einer Schnittdarstellung gemäß Schnittlinienverlauf XI-XI in **Fig. 10** in einer Vorraststellung;
- **Fig. 12**: die Arretierungseinrichtung gemäß **Fig. 11** in einer Endraststellung;
- **Fig. 13**: eine äußere Arretierungseinrichtung in nicht arretierter Stellung;
- **Fig. 14**: eine alternative Ausführungsform einer Arretierungseinrichtung am Beispiel einer inneren Arretierungseinrichtung in perspektivischer Darstellung;
- **Fig. 15**: die Arretierungseinrichtung gem. **Fig. 14** in einer Schnittdarstellung gem. Schnittlinienverlauf XIV-XIV in **Fig. 14** in einer Vorraststellung;
- **Fig. 16**: die Installation von Schleifringen an der Spiralkabeldose;
- **Fig. 17**: eine alternative Möglichkeit der Installation eines Schleifringes an der Spiralkabeldose.

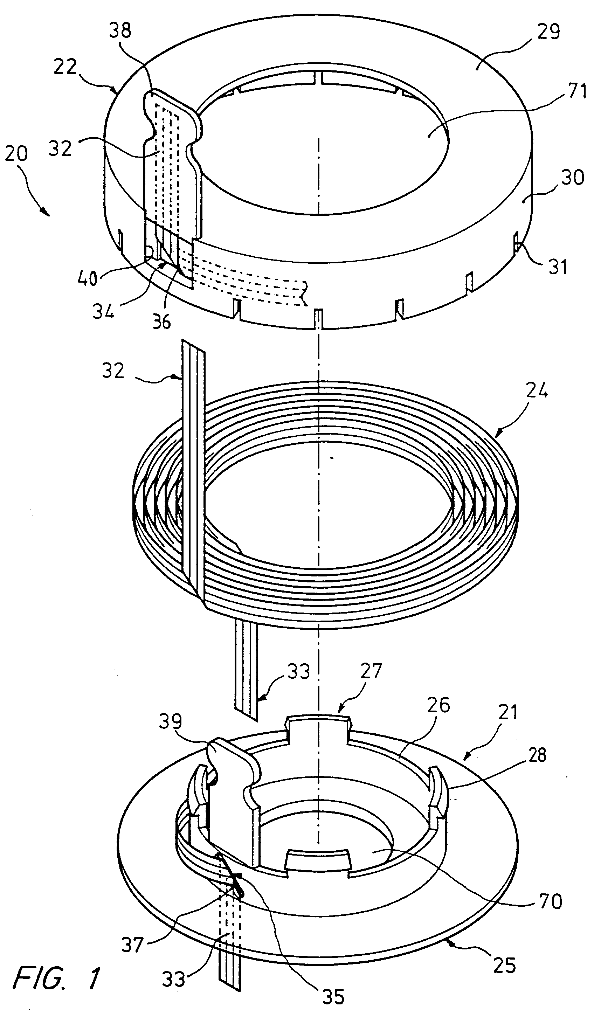

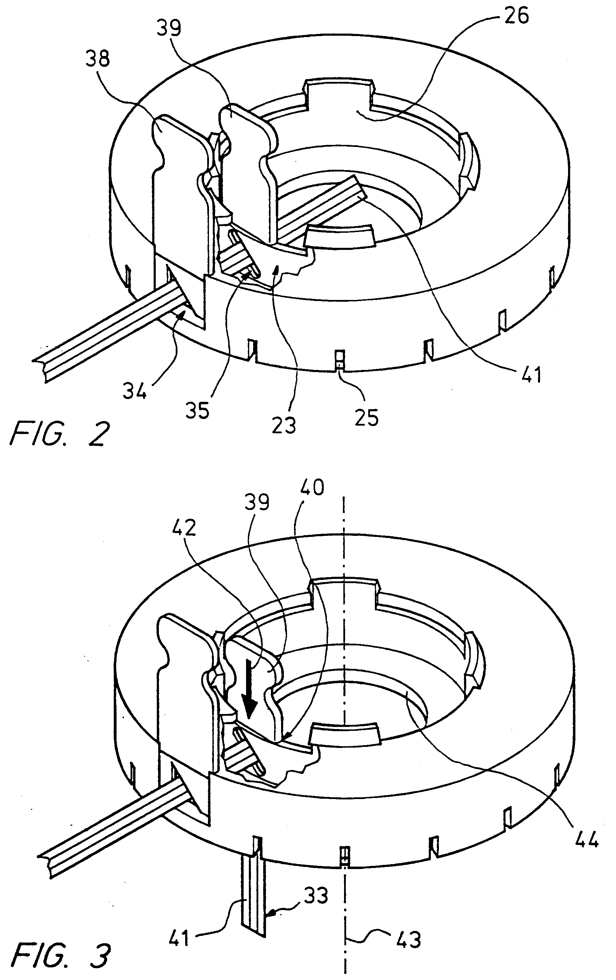

**Fig. 1** zeigt in einer Explosionsdarstellung eine mögliche Ausführungsform einer erfindungsgemäßen Spiralkabeldose 20, die ein durch ein Innenteil der Spiralkabeldose 20 gebildetes Dosenunterteil 21 und ein durch ein Außenteil der Spiralkabeldose 20 gebildetes Dosenoberteil 22 aufweist. Bei auf das Dosenunterteil 21 aufgesetztem Dosenoberteil 22 ist dazwischenliegend ein Kabelaufnahmeraum 23 (siehe **Fig. 2**) gebildet, der zur Aufnahme einer Kabelspirale 24 dient.

Das Dosenunterteil 21 weist eine mit einer Mittenöffnung 70 versehene Ringscheibenwand 25 und eine im wesentlichen senkrecht zu dieser angeordnete Innenzylinderwand 26 auf. Die Innenzylinderwand 26 ist an ihrem oberen, von der Ringscheibenwand 25 abgewandten Rand mit über den Umfang verteilt angeordneten Rasteinrichtungen 27 versehen. Die Rasteinrichtungen 27 weisen nach außen gerichtete Rastfortsätze 28 auf, die, wie etwa auch aus **Fig. 2** zu ersehen ist, nach dem Zusammenfügen des Dosenunterteils 21 und des Dosenoberteils 22 hinter dem Innenumfangsrand einer mit einer Mittenöffnung 71 versehenen Ringscheibenwand 29 des Dosenoberteils 21 einrasten und somit den Zusammenhalt der Dosenteile lösbar sichern.

Zur Bildung des Dosenoberteils 22 schließt am äußeren Umfangsrand der Ringscheibenwand 29 eine im wesentlichen senkrecht zu dieser angeordnete Außenzylinderwand 30 an. An ihrem unteren Rand ist die Außenzylinderwand 30 mit zum Rand hin auslaufenden Öffnungen 31 versehen.

Zur Durchführung von Kabelenden des die Kabelspirale 24 bildenden Flachkabels und zur Ausbildung von Winkelendbereichen 32, 33 der Kabelspirale 24 sind in der Außenzylinderwand 30 des Dosenoberteils 22 und in der Innenzylinderwand 26 des Dosenunterteils 21 Kabeldurchführungen 34 bzw. 35 vorgesehen. Die äußere Kabeldurchführung 34 ist dreieckförmig ausgebildet, wobei die die Hypotenuse des Dreiecks bildende Kante, die diagonal in der Außenzylinderwand 30 angeordnet ist, eine Umlenkkante 36 bildet. Die innere Kabeldurchführung 35 besteht aus einem Schlitz mit parallel verlaufenden Schlitzkanten, wobei die der Ringscheibenwand 25 zugewandte Schlitzkante eine Umlenkkante 37 bildet.

Darüber hinaus sind die Kabeldurchführungen 34, 35 mit Arretierungseinrichtungen 38, 39 versehen, die in Nutführungen 40 in der Außenzylinderwand 30 bzw. der Innenzylinderwand 26 verschiebbar angeordnet sind. Die Arretierungseinrichtungen 38, 39 ermöglichen im Zusammenwirken mit den Umlenkkanten 36, 37 die Ausbildung der Winkelendbereiche 32, 33 der Kabelspirale 24, wie durch den strichpunktierten Verlauf der Winkelendbereiche 32,33 im Dosenoberteil 22 und im Dosenunterteil 21 angedeutet.

Nachfolgend soll anhand der **Fig. 2** bis **6** das Verfahren zum Einbringen der Kabelspirale 24 in die Spiralkabeldose 20 näher erläutert werden:

In **Fig. 2** ist eine Anfangsphase des Verfahrens dargestellt, in der ein Kabelende des die spätere Kabelspirale 24 bildenden Flachkabels durch die äußere Kabeldurchführung 34 und die innere Kabeldurchführung 35 hindurchgeführt wird bis zur Ausbildung eines Kabelüberstands 41 gewünschter Länge auf der Innenseite der Innenzylinderwandung 26. Dabei befinden sich die Arretierungseinrichtungen 38, 39 zur Freigabe der Kabeldurchführungen 34, 35 in einer Offenstellung.

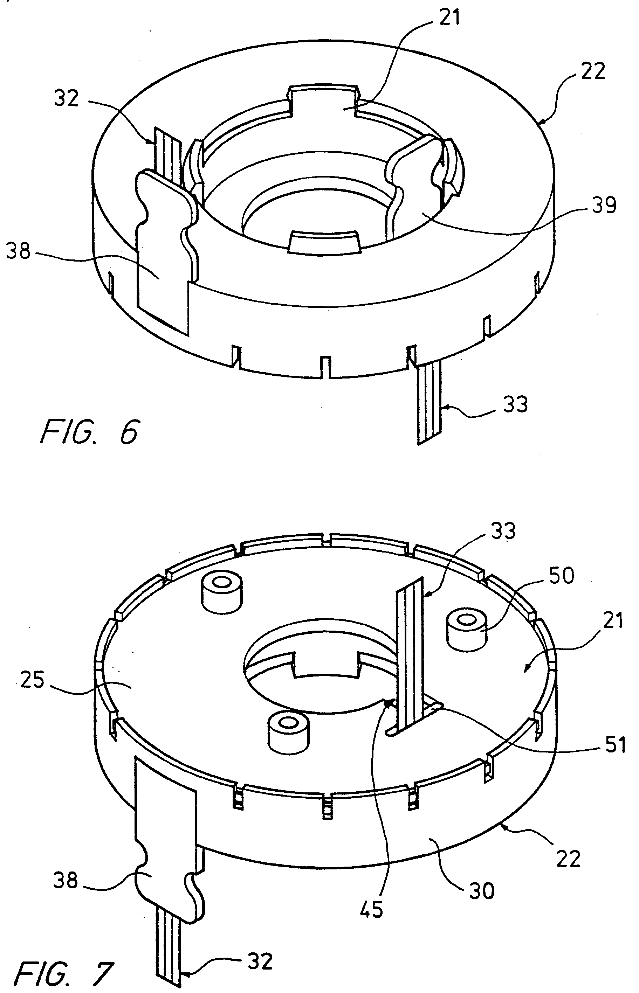

Anschließend wird, wie in **Fig. 3** durch den Pfeil 42 dargestellt, die Arretierungseinrichtung 39 in der Nutführung 40 nach unten verschoben, wobei der Kabelüberstand 41 um die Umlenkkante 37 herumgeschwenkt wird bis zur parallelen Ausrichtung mit einer Dosenlängsachse 43. Um diese parallele Ausrichtung des Überstands 41 trotz eines die Innenzylinderwand 26 überragenden Innenüberstands 44 der Ringscheibenwand 25 zu ermöglichen, ist, wie in **Fig. 7** in einer Unteransicht der Spiralkabeldose 20 dargestellt, eine Ausnehmung 45 am Innenrand der Ringscheibenwand 25 vorgesehen.

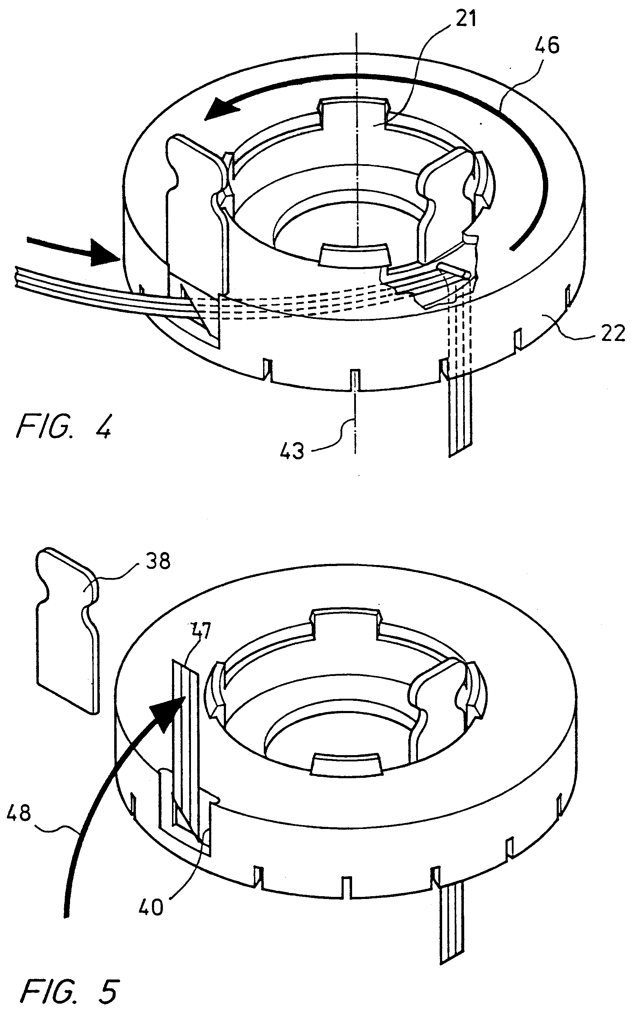

Nachfolgend erfolgt, wie in **Fig. 4** dargestellt, eine Drehung des durch das Dosenunterteil 21 gebildeten Innenteils der Spiralkabeldose 20 gegenüber dem durch das Dosenoberteil 22 gebildeten Außenteil der Spiralkabeldose 20. Hierzu kann, wie in **Fig. 4** nicht näher dargestellt, das Dosenunterteil 21 mit dem Innenüberstand 44 der Ringscheibenwand 25 auf einen konzentrisch zur Dosenlängsachse 43 rotierenden Wickeldorn aufgesetzt werden. Die Drehrichtung des Wickeldorns ist in **Fig. 4** durch den Pfeil 46 angegeben. Bei Drehung des Dosenunterteils 21 gegenüber dem Dosenoberteil 22 wird das Flachkabel kontinuierlich unter Ausbildung der Kabelspirale 24 in den Kabelaufnahmeraum 23 der Spiralkabeldose 20 durch die äußere Kabeldurchführung 34 hineingezogen. Nach Erreichen der gewünschten Windungszahl der Kabelspirale 24 wird, wie in **Fig. 5** dargestellt, ein außerhalb der Kabelspiraldose 20 verbleibender Überstand 47 in Richtung des Pfeils 48 um die Umlenkkante 36 zur parallelen Ausrichtung mit der Dosenlängsachse 43 herumgeschwenkt und durch Einsetzen der Arretierungseinrichtung 38 in die Nutführung 40 gesichert (**Fig. 6**), so daß auch der äußere Winkelendbereich 32 der Kabelspirale 24 ausgebildet ist.

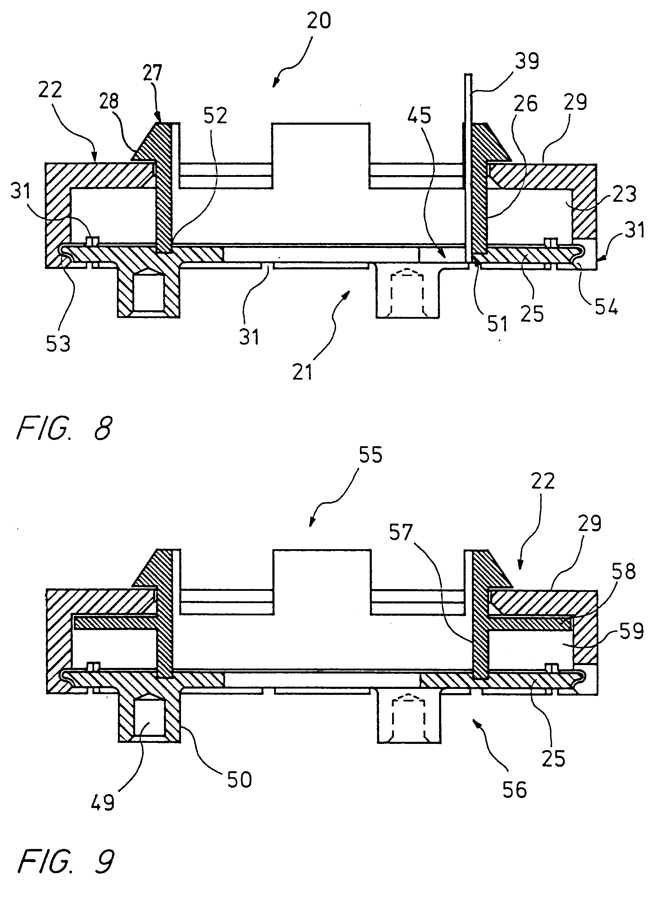

**Fig. 7** zeigt die Spiralkabeldose 20 in einer Unteransicht, in der auf der Unterseite der Ringscheibenwand 25 des Dosenunterteils 21 etwa mit einem Innengewinde 49 (siehe **Fig. 8,9**) versehene Befestigungsdome 50 vorgesehen sind, die zur Befestigung des Dosenunterteils 21 auf einem hier nicht dargestellten Lenkrad mittels einer Schraubverbindung dienen.

Desweiteren ist in **Fig. 7** im Bereich der Ausnehmung 45 in der Ringscheibenwand 25 ein in die Ausnehmung 45 übergehender Befestigungsschlitz 51 dargestellt, der bei zweiteiliger Ausbildung des Dosenunterteils 21 (siehe auch **Fig. 8**) zur Aufnahme der in der Nutführung 40 geführten Arretierungseinrichtung 39 dient, wodurch die Ringscheibenwand 25 verdrehsicher mit der Innenzylinderwand 26 verbunden ist.

**Fig. 8** zeigt ein zweiteilig ausgebildetes Dosenunterteil 21 in zusammengesetztem Zustand mit dem Dosenoberteil 22 in einer Querschnittsdarstellung. Zur konzentrischen Ausrichtung der Innenzylinderwand 26 und der Ringscheibenwand 25 weist diese an ihrer Oberseite eine axiale Ringnut 52 auf, in die die Innenzylinderwand 26 mit ihrem Unterrand einsetzbar ist. Zur axialen Sicherung des Dosenunterteils 21 und des Dosenoberteils 22 zueinander ist innenseitig am unteren Rand der Außenzylinderwand 30 des Dosenoberteils 22 eine hier als radiale Ringnut ausgebildete Stützführung 53 vorgesehen. Die Stützführung 53 dient gleichzeitig zur radialen Führung des Dosenunterteils 21 im Dosenoberteil 22 bei einer Relativdrehung. Bei Ausbildung der Stützführung 53 als Ringnut ist unmittelbar am Unterrand der Außenzylinderwandung 30 ein Rastring 54 ausgebildet, der eine besonders genaue axiale Fixierung des Dosenunterteils 21 im Dosenoberteil 22 ermöglicht.

Natürlich ist es auch möglich, für die Stützführung 53 keine Ringnut sondern etwa auch einen zum Unterrand der Außenzylinderwand 30 hin auslaufenden Rezess vorzusehen, da wegen der bereits durch die Rasteinrichtungen gegebenen einseitig axialen Sicherung ein einfacher axialer Anschlag, wie durch den hier nicht näher dargestellten Rezess ermöglicht, für die Funktion der Spiralkabeldose 20 ausreichend wäre.

Weiterhin ist aus der Darstellung gemäß **Fig. 8** ersichtlich, daß durch die Öffnungen 31, die umlaufend am Unterrand der Außenzylinderwand 30 ausgebildet sind, eine besonders vorteilhafte Möglichkeit geschaffen ist, um Verunreinigungen oder Kondenswasser aus dem Kabelaufnahmeraum 23 herauszubefördern.

Anhand der Darstellung der Spiralkabeldose 20 in **Fig. 8** ist weiterhin besonders deutlich zu erkennen, daß zur genauen Führung des Dosenunterteils 21 im Dosenoberteil 22 zwei Gleitpaarungen zwischen dem Dosenunterteil 21 und dem Dosenoberteil 22 ausgebildet sind. Die erste Gleitpaarung befindet sich zwischen den Rastfortsätzen 28 der Rasteinrichtungen 27 und der Oberseite der Ringscheibenwand 29 des Dosenoberteils 22. Diese Gleitpaarung ist axial wirksam. Die zweite Gleitpaarung ist zwischen dem radialen Umfangsrand der Ringscheibenwand 25 des Dosenunterteils 21 und der Stützführung 53 im Dosenoberteil 22 ausgebildet. Diese Gleitpaarung wirkt sowohl axial als auch radial.

**Fig. 9** zeigt als Variante eine Spiralkabeldose 55, deren Dosenunterteil 56 mit einer Innenzylinderwand 57 versehen ist, die eine parallel und unmittelbar benachbart zur Ringscheibenwand 29 des Dosenoberteils 22 angeordnete Stegwandung 58 aufweist. Bei dem in **Fig. 9** dargestellten Ausführungsbeispiel wird ein Kabelaufnahmeraum 59 axial nicht wie der Kabelaufnahmeraum 23 durch die Ringscheibenwände 29, 25 des Dosenoberteils 22 und des Dosenunterteils 21 sondern durch die Stegwandung 58 und die Ringscheibenwand 25 des Dosenunterteils 21 begrenzt. Hierdurch wird eine Relativdrehung der den Kabelaufnahmeraum 59 axial begrenzenden Wandungen und ein dadurch bedingter Kabelverschleiß vermieden.

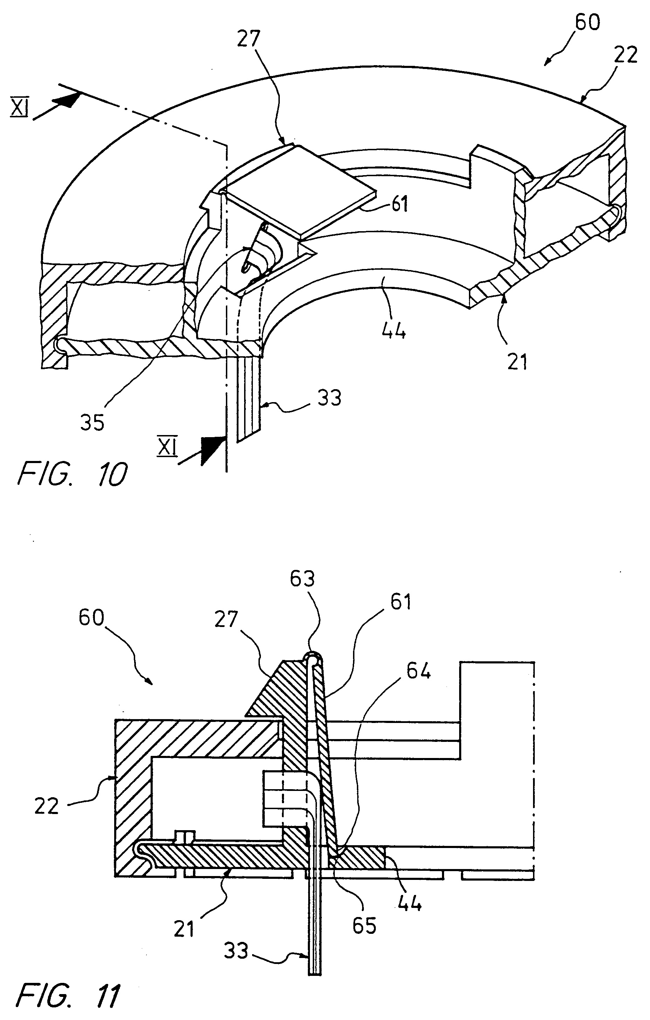

Insbesondere bei einer Ausführung entsprechend der Spiralkabeldose 55 erweist sich eine zweiteilige Ausbildung des Dosenunterteils als vorteilhaft. Die Verbindung zwischen den Teilen 25 und 26 bzw. 25 und 57 zur Bildung der Dosenunterteile 21 bzw. 56 kann dabei natürlich auch anders erfolgen als mittels der in **Fig. 9** nicht dargestellten, jedoch in gleicher Weise wie bei der in **Fig. 8** dargestellten Spiralkabeldose 20 verwendbaren Arretierungseinrichtung 39. Denkbar ist beispielsweise auch eine Rastverbindung oder jede andere geeignete Verbindungsart. Natürlich ist es auch möglich, wie in den **Fig. 10** bis **17** dargestellt, das Dosenunterteil 21 nicht zwei- oder mehrstückig sondern einstückig auszubilden. Dabei kann dann etwa auch unabhängig von der Art der Ausbildung der Arretierungseinrichtungen der beispielsweise in **Fig. 10** dargestellte Innenüberstand 44 wegfallen, und etwa, falls notwendig, durch nicht näher dargestellte Rasteinrichtungen für die Arretierungseinrichtung 61 ersetzt werden.

Die **Fig. 10** bis **13** zeigen einen Teil einer Spiralkabeldose 60, an der Arretierungseinrichtungen 61, 62 einstückig mit dem Dosenunterteil ausgebildet sind. In den **Fig. 10** bis **12** ist die innere Arretierungseinrichtung 61 im Bereich der Kabeldurchführung 35 über ein Filmscharnier 63 mit einer Rasteinrichtung 27 des Dosenunterteils 21 verbunden.

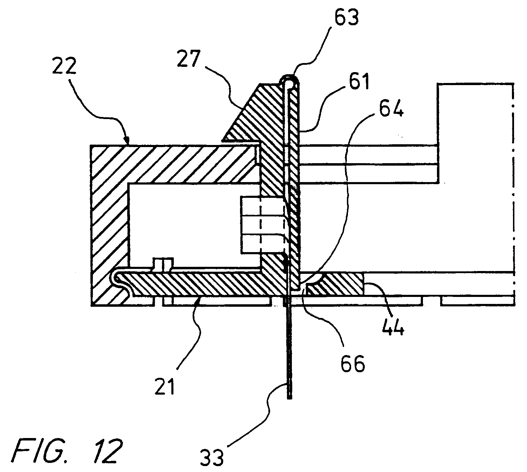

**Fig. 11** zeigt die Arretierungseinrichtung 61 in einer Vorraststellung. Hierzu ist die Arretierungseinrichtung 61 gegen den Biegewiderstand des Filmscharniers 63 so weit auf die Kabeldurchführung 35 zugeschwenkt, daß eine Rastkante 64 in eine Rastausnehmung 65 im Innenüberstand 44 des Dosenunterteils 21 einrastet. In dieser Stellung dient die Arretierungseinrichtung 61 quasi als Führung für ein Kabelende, so daß beim anfänglichen Durchführen des Kabelendes durch die Kabeldurchführungen 34, 35 (siehe **Fig. 2**) das Kabelende automatisch nach unten umgelenkt wird. Zur Verriegelung und endgültigen Ausbildung des inneren Winkelendbereiches 33 wird die Arretierungseinrichtung 61 in die in **Fig. 12** dargestellte Endraststellung überführt. Hierbei befindet sich die Rastkante 64 der Arretierungseinrichtung 61 in einer Rastöffnung 66 im Innenüberstand 44 der Ringscheibenwand 25 des Dosenunterteils 21, wobei die Rastöffnung 66 gleichzeitig zur Durchführung des Winkelendbereichs 33 durch den Innenüberstand 44 dient.

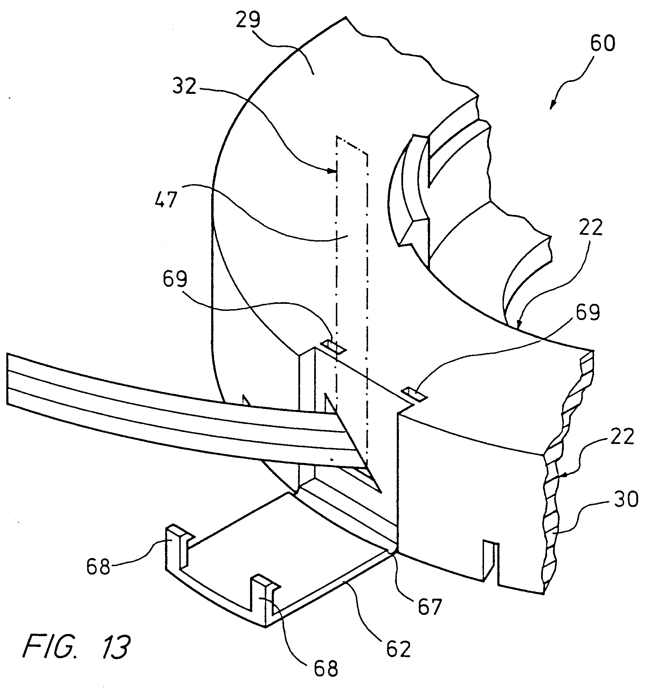

**Fig. 13** zeigt die äußere Arretierungseinrichtung 62, die über ein Filmscharnier 67 mit dem Unterrand der Außenzylinderwand 30 des Dosenoberteils 22 verbunden ist. In **Fig. 13** befindet sich die Arretierungseinrichtung 62 in ihrer Offenstellung, so daß bei Drehung des Dosenunterteils 21 gegenüber dem Dosenoberteil 22 (siehe **Fig. 4**) das Flachkabel ungehindert durch die Arretierungseinrichtung 62 in die Spiralkabeldose 60 eingezogen werden kann. Nach Erreichen der gewünschten Windungszahl der Kabelspirale wird der Kabelüberstand 47 um die Umlenkkante 36 der äußeren Kabeldurchführung 34 herumgeschwenkt und die Arretierungseinrichtung 62 bis zum Einrasten ihrer Rastfortsätze 68 in Rastausnehmungen 69 in der Ringscheibenwand 29 des Dosenoberteils 22 verschwenkt. Auf diese Art und Weise ist dann bei der Spiralkabeldose 60 der äußere Winkelendbereich 32 ausgebildet.

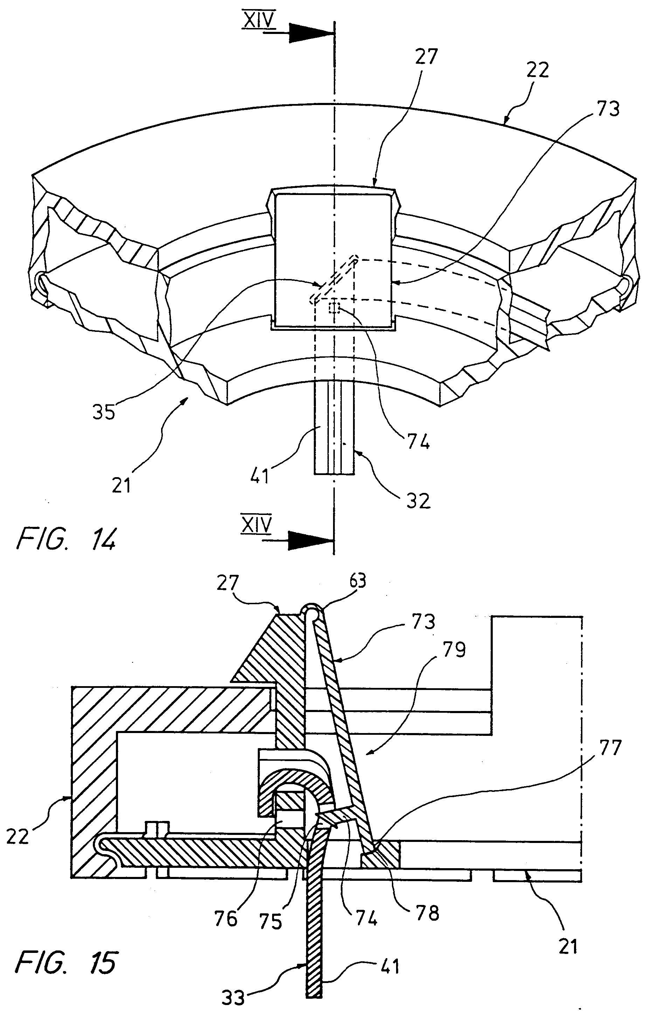

**Fig. 14** zeigt eine innere Arretierungseinrichtung 73, die in ihrem unteren, unterhalb der Kabeldurchführung 35 zu liegen kommenden Teil mit einer Rasteinrichtung 74 versehen ist. Wie weiter in **Fig. 15** dargestellt, greift die Rasteinrichtung 74 in eine entsprechend ausgebildete Öffnung 75 im Kabel ein. Die Öffnung 75 ist dabei so im Kabel angeordnet, daß die im Kabel enthaltenen elektrischen Leiterbahnen nicht in ihrer Funktion beeinträchtigt werden. In der Innenzylinderwand 26 des Innenteils 21 ist eine Rastöffnung 76 vorgesehen, die gemäß der. Darstellung in **Fig. 15** gegenüberliegend der Rasteinrichtung 74 ausgebildet ist.

Wenn sich, wie in **Fig. 15** dargestellt, die Arretierungseinrichtung in ihrer Vorraststellung befindet und das Kabelende durch die Kabeldurchführung 35 herausgeführt wird, rastet zunächst das Kabel mit der Öffnung 75 an der Rasteinrichtung 74 ein. Hierdurch ist die Position des Kabelendes und somit die Länge des inneren Kabelüberstands 41 genau festgelegt. In der Vorraststellung ist die Arretierungseinrichtung 73 mit ihrer Rastkante 77 in einer Rastöffnung 78 des Dosenunterteils 21 festgelegt. Zur Überführung in die Endraststellung wird die Rasteinrichtung 73 zusammen mit dem Kabelüberstand 41 in Richtung des Pfeils 79 verschwenkt, bis die Rasteinrichtung 74 in die Rastöffnung 76 am Dosenunterteil 21 einrastet.

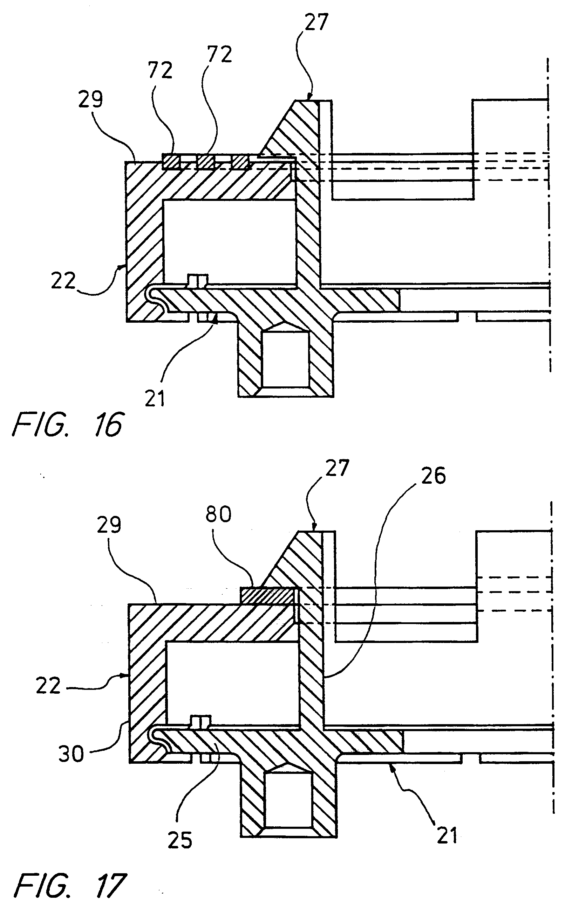

**Fig. 16** zeigt in einer Teilschnittdarstellung eine Spiralkabeldose, an der zusätzliche Bauteile, hier Schleifringe 72, appliziert sind. Die in **Fig. 16** dargestellten Schleifringe 72 sind konzentrisch auf der Scheibenwand 29 des Dosenoberteils 22 angeordnet. Zum sicheren Halt der Schleifringe 72 auf der Scheibenwand 29 sind diese in die Scheibenwand 29 eingelassen. Dies kann beispielsweise dadurch geschehen, daß die Schleifringe 72 bereits bei der Herstellung des Dosenoberteils 21, etwa als Kunststoff-Formteil, an den dargestellten Stellen angeordnet werden. Eine weitere Möglichkeit besteht darin, die Schleifringe 72 in auf der Oberseite der Scheibenwand 29 vorgesehene Nuten einzupressen. In jedem Fall ist eine formschlüssige Verbindung zwischen den Schleifringen 72 und dem Dosenoberteil 22 bzw. der Scheibenwand 29 gegeben, so daß keine besonderen Befestigungselemente zur Befestigung der Schleifringe 72 vorgesehen werden müssen.

Natürlich ist es auch möglich, die Schleifringe 72 nicht in einer Ebene sondern etwa auch höhenversetzt zueinander auf dem Dosenoberteil 22 anzuordnen. Dies kann beispielsweise dadurch geschehen, daß die Scheibenwand 29 mit einem entsprechend abgestuften Querschnitt versehen ist.

Wie aus **Fig. 17** zu ersehen ist, besteht auch die Möglichkeit, zusätzliche Elemente, wie etwa den hier dargestellten Schleifring 80, ohne besondere, die Struktur der Spiralkabeldose verändernde, Maßnahmen verliersicher an der Dose zu applizieren. Hierzu kann der Schleifring 80 auf einfache Art und Weise zwischen die Rastfortsätze 28 der Rasteinrichtungen 27 und die Oberseite der Scheibenwand 29 des Dosenoberteils 22 eingelegt werden. Bei einer derartigen Anordnung des Schleifrings 80 kann dieser gleichzeitig als Distanzstück zum Ausgleich von etwaigen Fertigungstoleranzen dienen, um überflüssiges Spiel zwischen den Dosenteilen auszugleichen. Auch diese Art der Schleifringapplikation erfordert keine zusätzlichen Befestigungselemente

Durch die Schleifringe 72, 80 wird ein drehwinkelunabhängiger elektrischer Abgriff für elektrische oder elektronische Einheiten ermöglicht, die relativ zu dem mit dem Schleifring oder den Schleifringen versehenen Dosenteil drehbar sind. Zwar ist in den Figuren 16, 17 lediglich das Dosenoberteil 22 mit einem bzw. mehreren Schleifring(en) versehen. Jedoch kann natürlich auch das Dosenunterteil 21 entsprechend ausgeführt sein.

Als besonders vorteilhaft erweisen sich im Dosenunterteil bzw. im Dosenoberteil vorgesehene Schleifringe dann, wenn es beispielsweise darum geht, eine multifunktionale Bedien- und Anzeigeeinheit, die im Pralltopf des Lenkrades angeordnet sein kann, an elektrische Leitungen anzuschließen, die durch den Lenkstock zum Lenkrad geführt werden. Die elektrischen Leitungen können dabei durch Flachleiterbandkabel realisiert sein, die auch die elektrische Verbindung von dem Schleifring oder den Schleifringen der Spiralkabeldose zur elektronischen Bedien- und Anzeigeeinheit im Pralltopf ermöglichen. Hierbei kann die Verbindung zwischen dem Flachleiterbandkabel und dem bzw. den Schleifring(en) durch einen auf dem Schleifring bzw. den Schleifringen gleitenden Federabnehmer und die Verbindung zwischen dem Flachleiterbandkabel und der elektronischen Bedien- und Anzeigeeinheit durch eine Crimp-Steckerverbindung oder etwa auch durch eine ZIF(zero insertion force)-Steckerverbindung oder jede andere denkbare Verbindungsart erfolgen.

## Patentansprüche

1. Spiralkabeldose (20,55,60) zur Aufnahme und Installation einer Kabelspirale (24), insbesondere einer elektrischen Airbag-Kabelspirale, deren Kabelenden durch Abwinkeln von der Kabelspirale (24) nach unterschiedlichen Seiten der Spiralebene als ein innerer Winkelendbereich (33) und ein äußerer Winkelendbereich (32) ausgebildet und mit einer Zugentlastung versehen sind, mit einem ersten Dosenteil (21,56) und einem zweiten Dosenteil (22), die relativ zueinander verdrehbar sind und einen ringförmigen Kabelaufnahmeraum (23,59) einschließen, wobei die Dosenteile (21,56;22) Kabeldurchführungen (34,35) zur Herausführung des inneren Winkelendbereiches (33) und des äußeren Winkelendbereiches (32) aus der Dose aufweisen, und der Kabelaufnahmeraum (23,59) zu einer Seite hin axial durch eine scheibenförmige Wand (Scheibenwand 29,58) sowie radial außenseitig durch eine Außenzylinderwand (30) des ersten Dosenteils (Außenteil 22) und zur anderen Seite hin axial durch eine Scheibenwand (25) sowie radial innenseitig durch eine Innenzylinderwand (57) des zweiten Dosenteils (Innenteil 21) begrenzt ist,
**dadurch gekennzeichnet**, daß
- die Kabeldurchführungen (34,35) jeweils in der Außenzylinderwand (30) des Außenteils (22) und der Innenzylinderwand (26,57) des Innenteils (21,56) angeordnet sind, und
- die Kabeldurchführungen (34,35) mit eine Kabelzugentlastung bewirkenden Umlenkeinrichtungen (36,38,62;37,39,61) zur Ausbildung der Winkelendbereiche (32,33) der Kabelspirale (24) versehen sind.

2. Spiralkabeldose nach Anspruch 1,
**dadurch gekennzeichnet**,
daß die Zugentlastung in jedem Winkelendbereich durch Verklemmen des Kabels mittels einer in eine Führung (40; 65; 66; 69; 76) einbringbaren Arretierungseinrichtung (38, 39; 61; 62; 73) bewirkt wird.

3. Spiralkabeldose nach Anspruch 1 oder 2,
**dadurch gekennzeichnet**,
daß das die Außenzylinderwand (30) aufweisende Außenteil (22) das Dosenoberteil und das die Innenzylinderwand (26, 57) aufweisende Innenteil (21,56) das Dosenunterteil bildet.

4. Spiralkabeldose nach Anspruch 3,
**dadurch gekennzeichnet**,
daß in der Außenzylinderwand (30) des Dosenoberteils zum Unterrand hin auslaufende Öffnungen (31) vorgesehen sind.

5. Spiralkabeldose nach einem oder mehreren der vorangehenden Ansprüche,
**dadurch gekennzeichnet**,
daß die Umlenkeinrichtungen je eine Umlenkkante (36,37) zur Abwinkelung und eine Arretierungseinrichtung (38,39;61;62;73) zur Fixierung der Winkelendbereiche (32,33) an der Dose aufweisen.

6. Spiralkabeldose nach Anspruch 5,
**dadurch gekennzeichnet**,
daß zumindest eine Arretierungseinrichtung (61,73) die Einstellung einer ersten Arretierungsstellung (Vorarretierung) und einer zweiten Arretierungsstellung (Endarretierung) ermöglicht, wobei die Vorarretierung zur Ausbildung und Führung eines Winkelendbereichs (33) und die Endarretierung zur Festlegung des Winkelendbereichs (33) dient.

7. Spiralkabeldose nach Anspruch 5 oder 6,
**dadurch gekennzeichnet**,
daß die Arretierungseinrichtungen (61;62;73) verliersicher, vorzugsweise einstückig, mit der Dose verbunden sind.

8. Spiralkabeldose nach einem der Ansprüche 5 bis 7,
**dadurch gekennzeichnet**,
daß die Arretierungseinrichtungen (61;62;73) Rasteinrichtungen (64;68;74) aufweisen, die in Führungen in Form entsprechender Rastaufnahmen (65;66;69;76) an der Dose einsetzbar sind.

9. Spiralkabeldose nach einem oder mehreren der vorangehenden Ansprüche,
**dadurch gekennzeichnet**,
daß die Arretierungseinrichtung (73) mit mindestens einer Rasteinrichtung(en) (74) versehen ist, die durch eine im Endbereich des Kabels vorgesehene Öffnung (75) durchführbar und in eine Führung in Form einer Rastöffnung (76) an der Dose einsetzbar ist.

10. Spiralkabeldose nach einem oder mehreren der vorangehenden Ansprüche,
**dadurch gekennzeichnet**,
daß die Innenzylinderwand (26,57) des Innenteils (21,56) in einem durch eine Mittenöffnung (71) der Scheibenwand (29) des Außenteils (22) hindurchführbaren Randbereich mit mindestens einer Rasteinrichtung (27) versehen ist, die zur vorzugsweise lösbaren, eine Relativdrehung ermöglichenden Verbindung des Innenteils (21,56) mit dem Außenteil (22) dient.

11. Spiralkabeldose nach einem oder mehreren der vorhergehenden Ansprüche,
**dadurch gekennzeichnet**,
daß die Scheibenwand (25) des Innenteils (21,56) mit ihrem äußeren Umfangsrand in eine Stützführung (53) im unteren Randbereich der Außenzylinderwand (30) des Außenteils (22) einsetzbar ist.

12. Spiralkabeldose nach einem oder mehreren der vorhergehenden Ansprüche,
**dadurch gekennzeichnet**,
daß das Innenteil (21,56) zweiteilig, nämlich aus einem durch die Innenzylinderwand gebildeten Teil und einem aus der Scheibenwand (25) gebildeten Teil, ausgebildet ist.

13. Spiralkabeldose nach Anspruch 12,
**dadurch gekennzeichnet**,
daß die Innenzylinderwand (26,57) und die Scheibenwand (25) zur Bildung des Innenteils (21,56) mittels der inneren Arretierungseinrichtung (39,61) miteinander verriegelbar sind.

14. Spiralkabeldose nach einem oder mehreren der vorangehenden Ansprüche,
**dadurch gekennzeichnet**,
daß die Scheibenwand (25) des Innenteils (21,56) mit einer Mittenöffnung (70) versehen ist und mit einem einen Innenüberstand (44) bildenden Innenrand die Innenzylinderwand (26,57) nach innen überragt.

15. Spiralkabeldose nach einem oder mehreren der vorangehenden Ansprüche,
**dadurch gekennzeichnet**,
daß an der Innenzylinderwand (57) eine parallel zur Scheibenwand (25) angeordnete Stegwand (58) ausgebildt ist, derart, daß der Kabelaufnahmeraum (59) der Dose auf einer Seite axial durch die Stegwand (58) begrenzt ist.

16. Spiralkabeldose nach einem oder mehreren der vorangehenden Ansprüche,
**dadurch gekennzeichnet**,
daß zwischen der Scheibenwand (29) des Außenteils (22) und den Rasteinrichtungen (27) des Innenteils (21,56) ein Schleifring (80) angeordnet ist.

17. Spiralkabeldose nach einem oder mehreren der vorangehenden Ansprüche,
**dadurch gekennzeichnet**,
daß in die Scheibenwand (29) des Außenteils (22) ein oder mehrere Schleifring(e) (72) eingelassen ist (sind).

18. Spiralkabeldose nach Anspruch 16,
**dadurch gekennzeichnet**,
daß mehrere Schleifringe (72) höhenversetzt zueinander angeordnet sind.

19. Verwendung der Spiralkabeldose nach einem oder mehreren der vorangehenden Ansprüche als Dose zum Herstellen einer Kabelspirale (24) und / oder Transport der Kabelspirale (24) zu deren Einsatzort und / oder Einbau der Kabelspirale am Einsatzort.

20. Verfahren zur Einbringung einer Kabelspirale gemäß dem Anspruch 1 in eine Spiralkabeldose (20,55,60) nach einem oder mehreren der vorangehenden Ansprüche,
**dadurch gekennzeichnet**, daß
- ein Endbereich des zur Herstellung der Kabelspirale (24) dienenden Kabels durch die äußere Kabeldurchführung (34) und die innere Kabeldurchführung (35) hindurchgeführt wird, wobei das aus der inneren Kabeldurchführung (35) austretende Kabelende mittels der inneren Umlenkkante (37) zur Bildung des inneren Winkelendbereiches (33) in eine Richtung zur Dosenlängsachse (43) hin umgelenkt wird,
- der innere Winkelendbereich (33) durch die innere Arretierungseinrichtung (39,61) festgelegt wird,
- das mit der Innenzylinderwand (26,57) versehene Dosenteil (Innenteil 21,56) gegenüber dem mit der Außenzylinderwand (30) versehenen Dosenteil (Außenteil 22) gedreht wird, wobei sich das Kabel auf der als Wickelkern dienenden Außenseite der Innenzylinderwand (26,57) spiralförmig innerhalb des Kabelaufnahmeraums (23,59) aufwickelt, und die Drehung so lange erfolgt, bis die vorgegebene Windungszahl der Kabelspirale (24) erreicht ist,
- ein nach außen aus der äußeren Kabeldurchführung (34) herausragendes Kabelende um die äußere Umlenkkante (36) herum zur Bildung des äußeren Winkelendbereiches (32) in die andere Richtung zur Dosenlängsachse (43) hin umgelenkt wird, und
- der äußere Winkelendbereich (32) durch die äußere Arretierungseinrichtung (38,62) an der Dose festgelegt wird.

21. Verfahren nach Anspruch 20,
**dadurch gekennzeichnet**,
daß sich bei Bildung des inneren Winkelendbereiches (33) die innere Arretierungseinrichtung (61) in der Vorraststellung befindet und zum Festlegen des inneren Winkelendbereiches (33) in die Endraststellung überführt wird.

22. Verfahren nach Anspruch 20 oder 21,
**dadurch gekennzeichnet**,
daß sich bei Bildung des äußeren Winkelendbereiches (32) die äußere Arretierungseinrichtung (62) in einer Offenstellung befindet und zum Festlegen des äußeren Winkelendbereichs (32) in eine Raststellung überführt wird.

23. Verfahren nach einem der vorangehenden Ansprüche,
**dadurch gekennzeichnet**, daß
- die Kabelspiraldose (20,55,60) nach dem Wickeln der Kabelspirale (24) unter Verwendung als Transportdose zu dem Einsatzort der Kabelspirale (24) gebracht wird, und
- die Kabelspiraldose (20,55,60) mit der darin aufgenommenen Kabelspirale (24) am Einsatzort eingesetzt wird.
